(19) Europäisches Patentamt
European Patent Office
Office européen des brevets

(11) **EP 2 077 285 A1**

(12) **EUROPEAN PATENT APPLICATION**
published in accordance with Art. 153(4) EPC

(43) Date of publication:
**08.07.2009 Bulletin 2009/28**

(21) Application number: **07829010.3**

(22) Date of filing: **02.10.2007**

(51) Int Cl.:
**C08F 214/22** (2006.01)    **C08F 2/44** (2006.01)
**C08K 5/13** (2006.01)    **C08K 5/14** (2006.01)
**C08K 5/17** (2006.01)    **C08K 5/3477** (2006.01)
**F23K 5/02** (2006.01)

(86) International application number:
**PCT/JP2007/069270**

(87) International publication number:
**WO 2008/050588 (02.05.2008 Gazette 2008/18)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.10.2006 JP 2006289431**

(71) Applicant: **Unimatec Co., Ltd.**
**Tokyo 105-8585 (JP)**

(72) Inventors:
• **SHIMIZU, Toshiharu**
**Kitaibaraki-shi**
**Ibaraki 319-1544 (JP)**

• **MAEDA, Mitsuru**
**Kitaibaraki-shi**
**Ibaraki 319-1544 (JP)**

(74) Representative: **Albrecht, Thomas et al**
**Kraus & Weisert**
**Patent- und Rechtsanwälte**
**Thomas-Wimmer-Ring 15**
**80539 München (DE)**

(54) **FLUORINATED ELASTOMER FOR MOLDING OF FUEL LINE COMPONENT, AND COMPOSITION COMPRISING THE SAME**

(57)    A fluorine-containing elastomer for molding fuel system parts, which has a copolymer composition comprising 10-40% by weight of tetrafluoroethylene (TFE), 80-30% by mole of vinylidene fluoride (VdF), and 10-30% by mole of hexafluoropropylene(HFP), as copolymerized in the presence of an iodine and bromine-containing compound represented by the following general formula : $RBr_nI_m$ (where R is a fluorohydrocarbon group, a chlorofluorohydrocarbon group, or a hydrocarbon group, each having 1-10 carbon atoms, and n and m each are 1 or 2), and has an intrinsic viscosity of 20-180ml/g, Mw (weight average molecular weight)/Mn (number average molecular weight) ratio of 2-20, and a molecular weight distribution of monopeak or multipeak type, and a fluorine-containing elastomer composition, which comprises the fluorine-containing elastomer, at least one of a polyol vulcanizing agent and a polyamine vulcanizing agent, an organic peroxide, and a polyfunctional unsaturated compound. The composition is suitable for use in molding fuel system parts to give fluorine-containing elastomer moldings with distinguished moldability, vulcanizate physical properties, chemical resistance, photostability and economy.

**Description**

TECHNICAL FIELD

The present invention relates to a fluorine-containing elastomer for molding fuel system parts and a composition thereof, and more particularly to a fluorine-containing elastomer for molding fuel system parts, particularly for molding fuel hoses, which can give vulcanizates having good heat resistance, solvent resistance, chemical resistance, etc. and also having improved mechanical properties and compression set characteristics, and a composition thereof.

BACKGROUND ART

Fuel system parts for use in contact with fuels such as alcohol, e.g. methanol, etc., gasoline, kerosene, naphtha, etc. must have distinguished heat resistance, solvent resistance, chemical resistance, etc., so fluorine-containing elastomers distinguished in these characteristics have been so far mainly used.

It is known that the fluorine-containing elastomers can be vulcanized by polyamine vulcanization, polyol vulcanization, peroxide vulcanization, etc., from which most suitable vulcanization method has been selected, depending on uses. However, in uses requiring moldability such as extrusion processability, in-mold flowability, etc.; in uses as integrated materials in combination with other materials ; and in uses under severe conditions such as uses in the presence of methanol, etc., even vulcanization by the conventional methods now no more can satisfy the desired characteristics.

Among the afore-mentioned vulcanization methods, the polyamine vulcanization has such a problem that the resulting vulcanizates generally have a low strength and poor compression set characteristics, and the polyol vulcanization has such a problem that the resulting vulcanizates have poor solvent resistance, chemical resistance, alkali resistance and steam resistance. Furthermore, these two vulcanization methods cannot vulcanize polymers of low molecular weight easily. The peroxide vulcanization, on the other hand, has no such problems and can give vulcanizates with improved physical properties, but the vulcanization extremely fails to proceed when brought into contact with air at the time of vulcanization, so molding flashes become hard to remove, thereby fouling the mold. This is a disadvantage. Furthermore, polymers of high molecular weight is hard to peroxide-vulcanize, resulting in poor strength and compression set characteristics.

To solve such problems of these vulcanization methods at the same time, for example, a method for covulcanizing a blend of vinylidene fluoride/hexafluoropropylene/tetrafluoroethylene terpolymer and tetrafluoroethylene/propylene copolymer by polyol or polyamine vulcanizing agent and a peroxide vulcanizing agent together has been so far proposed. However, the proposed vulcanization reactions cannot involve either deiodine radical reaction or debromine radical reaction, and thus the vulcanization reactions are quite hard to proceed.

Patent Document 1 : JP-A-60-72950
Patent Document 2 : JP-A-62-30142
Patent Document 3 : JP-A-62-30143

The following Patent Document 4, on the other hand, proposes a method for covulcanizing a blend of bromine-containing vinylidene fluoride/hexafluoropropylene/tetrafluoroethylene terpolymer, and tetrafluoroethylene/propylene copolymer by a combination of a polyol vulcanizing agent with a peroxide vulcanizing agent. However, the proposed method utilizes hardly disengageble bromines as vulcanization sites, so the vulcanization rate is so low and the resulting vulcanizates are not always satisfactory for physical properties.

Patent Document 4 : JP-A-62-79251

Furthermore, fluorine-containing elastomer compositions have been so far proposed, where an iodine- or bromine-containing bimodal polymer (polymer having a molecular weight distribution with two peaks) is vulcanized by a combination of a polyol vulcanizing agent or a polyamine vulcanizing agent with a peroxide vulcanizing agent. Iondine-combined, fluorine-containing elastomer disclosed in the following Patent Document 5 has a low photostability, and a poor cost performance of the iodine-containing compound, that is, less economical merit, whereas the bromine-combined, fluorine-containing elastomer disclosed in the following Patent Document 6 has a low vulcanization rate, though there is no such problem due to the iodine compound, and the resulting vulcanizates are not always satisfactory for vulcanizate characteristics.

Patent Document 5 : Japanese Patent No. 2,509,388
Patent Document 6 : JP-A-7-196881

## DISCLOSURE OF THE INVENTION

## PROBLEM TO BE SOLVED BY THE INVENTION

The object of the present invention is to provide a fluorine-containing elastomer suitable for use in molding fuel system parts and to give fluorine-containing elastomer moldings with distinguished moldability, vulcanizate physical properties, chemical resistance, photostability and economy, and also a composition thereof.

## MEANS FOR SOLVING THE PROBLEM

The object of the present invention can be attained by a fluorine-containing elastomer for molding fuel system parts, which has a copolymer composition comprising 10-40% by mole of tetrafluoroethylene (TFE), 80-30% by mole of vinylidene fluoride (VdF), and 10-30% by mole of hexafluoropropylene (HFP), as copolymerized in the presence of an iodine and bromine-containing compound represented by the following general formula :

$$RBr_nI_m$$

(where R : a fluorohydrocarbon group, a chlorofluorohydrocarbon group, or a hydrocarbon group, each having 1-10 carbon atoms, and n and m : 1 or 2), and has an intrinsic viscosity of 20-180ml/g, Mw (weight average molecular weight) /Mn (number average molecular weight) ratio of 2-20, and monopeak type or multipeak type molecular weight distribution, and also by a fluorine-containing elastomer composition, which comprises the afore-mentioned fluorine-containing elastomer, at least one of a polyol vulcanizing agent and a polyamine vulcanizing agent, an organic peroxide, and a polyfunctional unsaturated compound.

## EFFECT OF THE INVENTION

The fluorine-containing elastomer for use the present fluorine-containing elastomer composition has iodine · bromine groups, which are substantially bonded to polymer molecule terminals, when viewed from the polymerization mechanism concerned, and such terminal iodine · bromine groups are to be disengaged from the polymer molecules by the action of an organic peroxide at the time of vulcanization, whereas the polymer molecules are bonded one to another at the terminals through a polyfunctional unsaturated compound and also cross-linked between polymer chains by a polyol vulcanizing agent or a polyamine vulcanizing agent. That is, from the low molecular weight component to the high molecular weight components, these components can be fully vulcanized to give vulcanizates having a high strength and well balanced physical properties between the strength and elongation. Furthermore, the increased cross-linking density can improve the compression set characteristics. Even very low molecular weight polymers, which are so far regarded as invulcanizable by polyol vulcanization or polyamine vulcanization, so the vulcanizates can have a considerably improved solvent resistance, particularly methanol extraction resistance.
In the conventional polyol vulcanization or polyamine vulcanization, the cross-linking sites are in carbon-oxygen or carbon-nitrogen bond structures, resulting in poor chemical resistance, whereas in the present invention the cross-linking sites are reinforced with reticulated chains formed by carbon-carbon bond structures by peroxide vulcanization, resulting in improved chemical resistance. In the conventional peroxide vulcanization, the vulcanization reaction will be hard to proceed upon contacting with air, and consequently the air-contacted molding flashes are hard to remove due to insufficient vulcanization, and will remain as deposited on the mold to foul it, whereas in the present invention the air-contacted parts can be also fully vulcanized by the polyol vulcanizing agent or polyamine vulcanizing agent, and thus the molding flashes can be easy to remove without fouling the mold.
Furthermore, the present invention can provide an elastomer composition having a much distinguished processability, particularly extrusion processability, distinguished vulcanizate physical properties, a very distinguished working efficiency without any roll stickiness, and a distinguished productivity performance by using a fluorine-containing elastomer having specific molecular weight distributions. Particularly, an elastomer having at least two peaks of low molecular weight component and high molecular weight component, where at least the low molecular weight component contains iodine · bromine groups, can contribute to provide the composition having a distinguished processability in the low molecular weight component, while keeping distinguished vulcanizate physical properties in the high molecular weight component. Still furthermore, the low molecular weight components can be bonded one to another by the iodine · bromine groups involved in the molecules, when vulcanized, without lowering the vulcanizate physical properties. The low molecular weight components are hardly extracted from the resulting vulcanizates, when immersed into solvents or fuel oil, showing a distinguished solvent extraction resistance.
The present fluorine-containing elastomer composition is suitable for use in molding fuel system parts requiring heat resistance, solvent resistance, and fuel oil resistance, particularly in molding fuel hoses, and can be continuously processed, for example, by extrusion molding, etc.

BEST MODES FOR CARRYING OUT THE INVENTION

The present fluorine-containing elastomer has a copolymer composition comprising 10-40% by mole, preferably 15-35% by mole, of tetrafluoroethylene (TFE), 80-30% by mole, preferably 70-40% by mole, of vinylidene fluoride (VdF), and 10-30% by mole, preferably 15-25% by mole, of hexafluoropropylene (HFP), as copolymerized in the presence of an iodine and bromine-containing compound. When the copolymer composition of TFE is more than 40% by mole, the cold resistance of the resulting fluorine-containing elastomer will be deteriorated, and the elasticity will be lowered. This is not preferable. When it is less than 10% by mole, on the other hand, the oil resistance and the chemical resistance will be lowered. This is also not preferable. Furthermore, when the copolymer composition of VdF is less than 30% by mole, the cold resistance will be extremely deteriorated. When the copolymer composition of HFP is more than 30% by mole, the compression set characteristics will be considerably deteriorated, whereas when it is less than 10% by mole, the rubber elasticity of the fluorine-containing elastomer will be lowered.

Ethyl malonate, acetone, isopropanol, etc. can be used as a chain transfer agent, but in the present invention an iodine and bromine-containing compound having a chain transfer action can be used, so the addition of such other chain transfer agents is not always necessary.

Iodine-containing bromine compound for use in the present invention can be represented by the following general formula :

$$RBr_nI_m$$

(where R : a fluorohydrocarbon group, a chlorofluorohydrocarbon group, or a hydrocarbon group, each having 1-10 carbon atoms, and n and m : 1 or 2), which can be linear or aromatic. Linear $RBr_nI_m$ includes, for example, 1-bromo-2-iodoperfluoroethane, 1-bromo-3-iodoperfluoropropane, 1-bromo-4-iodoperfluorobutane, 2-bromo-3-iodoperfluorobutane, 1-bromo-2-iodoperfluoro(2-methylpropane), monobromomonoiodoperfluorocyclobutane, monobromomonoiodoperfluoropentane, monobromomonoiodoperfluoro-n-octane, monobromomonoiodoperfluorocyclohexane, 1-bromo-1-iodo-2-chloroperfluoroethane, 1-bromo-2-iodo-2-chloroperfluoroethane, 1-iodo-2-bromo-2-chloroperfluoroethane, 1,1-dibromo-2-iodoperfluoroethane, 1,2-dibromo-2-iodoperfluoroethane, 1,2-diiodo-2-bromoperfluoroethane, 1-bromo-2-iodo-1,2,2-trifluoroethane, 1-iodo-2-bromo-1,2,2-trifluoroethane, 1-bromo-2-iodo-1,1-difluoroethane, 1-iodo-2-bromo-1,1-difluoroethane, 1-bromo-2-iodo-1-fluoroethane, 1-iodo-2-bromo-1-fluoroethane, 1-bromo-2-iodo-1,1,3,3,3-pentafluoropropane, 1-iodo-2-bromo-1,1,3,3,3-pentafluoropropane, 1-bromo-2-iodo-3,3,4,4,4-pentafluorobutane, 1-iodo-2-bromo-3,3,4,4,4-pentafluorobutane, 1,4-dibromo-2-iodoperfluorobutane, 2,4-dibromo-1-iodoperfluorobutane, 1,4-diiodo-2-bromoperfluorobutane, 1,4-dibromo-2-iodo-3,3,4,4-tetrafluorobutane, 1,4-diiodo-2-bromo-3,3,4,4-tetrafluorobutane, 1,1-dibromo-2,4-diiodoperfluorobutane, 1-bromo-2-iodo-1-chloroethane, 1-iodo-2-bromo-1-chloroethane, 1-bromo-2-iodo-2-chloroethane, 1-bromo-2-iodo-1,1-dichloroethane, 1,3-dibromo-2-iodoperfluoropropane, 2,3-dibromo-2-iodoperfluoropropane, 1,3-diiodo-2-bromoperfluoropropane, 1-bromo-2-iodoethane, 1-bromo-2-iodopropane, 1-iodo-2-bromopropane, 1-bromo-2-iodobutane, 1-iodo-2-bromobutane, 1-bromo-2-iodo-2-trifluoromethyl-3,3,3-trifluoropropane, 1-iodo-2-bromo-2-trifluoromethyl-3,3,3-trifluoropropane, 1-bromo-2-iodo-2-phenylperfluoroethane, 1-iodo-2-bromo-2-phenylperfluoroethane, 3-bromo-4-iodoperfluorobutene-1, 3-iodo-4-bromoperfluorobutene-1, 1-bromo-4-iodoperfluorobutene-1, 1-iodo-4-bromoperfluorobutene-1, 3-bromo-4-iodo-3,4,4-trifluorobutene-1, 4-bromo-3-iodo-3,4,4-trifluorobutene-1, 3-bromo-4-iodo-1,1,2-trifluorobutene-1, 4-bromo-5-iodoperfluoropentene-1, 4-iodo-5-bromoperfluoropentene-1, 4-bromo-5-iodo-1,1,2-trifluoropentene-1, 4-iodo-5-bromo-1,1,2-trifluoropentene-1, 1-bromo-2-iodoperfluoroethyl perfluoromethyl ether, 1-bromo-2-iodoperfluoroethyl perfluoroethyl ether, 1-bromo-2-iodoperfluoroethyl perfluoropropyl ether, 2-bromo-3-iodoperfluoroethyl perfluorovinyl ether, 1-bromo-2-iodoperfluoropropyl perfluorovinyl ether, 1-bromo-2-iodoperfluoroethyl perfluoroallyl ether, 1-bromo-2-iodoperfluoroethyl methyl ether, 1-iodo-2-bromoperfluoroethyl ethyl ether, 1-iodo-2-bromoethyl ethyl ether, 1-bromo-2-iodoethyl-2'-chloroethyl ether, etc. Aromatic $RBr_nI_m$ includes, for example, benzene derivatives with such substituents as 1-iodo-2-bromo, 1-iodo-3-bromo, 1-iodo-4-bromo, 3,5-dibromo-1-iodo, 3,5-diiodo-1-bromo, 1-(2-iodoethyl)-4-(2-bromoethyl), 1-(2-iodoethyl)-3-(2-bromoethyl), 1-(2-iodoethyl)-4-(2-bromoethyl), 3,5-bis(2-bromoethyl)-1-(2-iodoethyl), 3,5-bis(2-iodoethyl)-1-(2-bromoethyl), 1-(3-iodopropyl)-2-(3-bromopropyl), 1-(3-iodopropyl)-3-(3-bromopropyl), 1-(3-iodopropyl)-4-(3-bromopropyl), 3,5-bis(3-bromopropyl)-1-(3-iodopropyl), 1-(4-iodobutyl)-3-(4-bromobutyl), 1-(4-iodobutyl)-4-(4-bromobutyl), 3,5-bis(4-iodobutyl)-1-(4-bromobutyl), 1-(2-iodoethyl)-3-(3-bromopropyl), 1-(3-iodopropyl)-3-(4-bromobutyl), 3,5-bis(3-bromopropyl)-1-(2-iodoethyl), 1-iodo-3-(2-bromoethyl), 1-iodo-3-(3-bromopropyl), 1,3-diiodo-5-(2-bromoethyl), 1,3-diiodo-5-(3-bromopropyl), 1-bromo-3-(2-iodoethyl), 1-bromo-3-(3-iodopropyl), 1,3-dibromo-5-(2-iodoethyl), 1,3-dibromo-5-(3-iodopropyl), etc., and perfluorobenzene derivatives with such substituents as 1-iodo-2-bromo, 1-iodo-3-bromo, 1-iodo-4-bromo, 3,5-dibromo-1-iodo, 3,5-diiodo-1-bromo, etc. Among these $RBr_nI_m$ compounds, 1-bromo-2-iodoperfluoroethane can be preferably used.

In the copolymerization reaction, the iodine and bromine-containing compound can be used in a proportion of 0.01-1.0% by weight, preferably 0.05-0.5% by weight, on the basis of sum total amount of charged tetrafluoroethylene, vinylidene fluoride, and hexafluoropropylene.

Any of such fluorine-containing elastomers of monopeak type, whose molecular weight distribution has only a single peak, or multipeak type, whose molecular distribution has at least two peaks, can be used, but the multipeak type is preferable, because the multipeak enables the high molecular weight component mainly to have physical properties and the low molecular weight component to have a processability.

The fluorine-containing elastomer must have an intrinsic viscosity [η] of 20-180ml/g, preferably 30-100ml/g, where the intrinsic viscosity [η] is a index of a molecular weight, and can be determined by dissolving a sample into methyl ethyl ketone to make a solution having a concentration of 0.1g/100ml, followed by measurement at 35°C with an Ube-Rhode viscometer. When the intrinsic viscosity [η] is less than 20ml/g, the low molecular weight component will be so much increased that the compression set characteristics and mechanical characteristics are deteriorated, and the roll stickiness will be so increased and the mold releasability becomes unsatisfactory, whereas when it is more than 180ml/g a thicker sheet will be hard to make even through rolls.

It is necessary to select a fluorine-containing elastomer having a ratio of weight average molecular weight (Mw) to number average molecular weight (Mn), Mw/Mn, of 2-20, preferable 3-15, for the multipeak type, and 2-10, preferably 3-8, for the monopeak type, where the Mw/Mn shows a molecular weight distribution. When Mw/Mn is above the upper ends of the ranges, the molecular weight distribution will be broadened to include relatively so much low molecular weight components and ultra-high molecular weight components that both processability and physical properties cannot be satisfied at the same time, that is, an increasing amount of the low molecular weight components can improve the processability, but will lower the physical properties, and an increasing amount of the ultra-high molecular weight components will act in a reversed way, whereas in a Mw/Mn ratio below the lower end of the ranges, such effects cannot be obtained remarkably, when the molecular weight distribution is of a multipeak types.

Polymerization can be carried out by any of emulsion polymerization, suspension polymerization, and solution polymerization. To prepare a fluorine-containing elastomer of multipeak type, emulsion polymerization is preferable from the viewpoints of productivity and economy. The fluorine-containing elastomer of multipeak type can be also prepared by further adding a chain transfer agent, and, if required, a polymerization initiator during the polymerization reaction, or can be also obtained by blending a high molecular weight polymer with a low molecular weight polymer.

It is preferable to conduct emulsion polymerization reaction generally at a temperature of about 0° to about 100°C, preferably about 20° to about 80°C under pressure of about 0 to about 100kg/cm$^2$G (about 0-9.8MPaG), preferably about 10 to about 50kg/cm$^2$G (about 0.98 to about 4.9MPaG), using a water-soluble inorganic peroxide such as ammonium persulfate, etc., or a redox system thereof with a reducing agent as a catalyst, and at least one of ammonium 2,3,3,3-tetrafluoro-2-[1,1,2,3,3,3-hexafluoro-2-(1,1,2,2,3,3,3-heptafluoropropoxy)propoxy]-1-propanoate, ammonium perfluorooctanoate, ammonium perfluoroheptanoate, ammonium perfluorononanoate, etc., preferably ammonium perfluorooctanoate, as an emulsifying agent. At the time of polymerization, an electrolyte substance having a buffering function, such Na$_2$HPO$_4$, NaH$_2$PO$_4$, KH$_2$PO$_4$, etc. or sodium hydroxide can be added to adjust pH of the polymerization system.

Blending can be carried out in a proportion of the high molecular weight, fluorine-containing elastomer component to a low molecular weight, fluorine-containing elastomer component of 70/30-30/70, preferably 60/40-40/60. When the proportion of high molecular weight, fluorine-containing elastomer is more than 70, the Mooney viscosity of the blended polymer will be increased, thereby lowering the flowability, whereas in the proportion of less than 30, the stickiness of the blend will be increased, and in some cases the Mooney viscosity of the blended polymer will fail to satisfy the practical level. In production of a fluorine-containing elastomer of multipeak type, it is possible to use a high molecular weight polymer having an intrinsic viscosity [η] of 50-130ml/g, preferably 60-120ml/g, and a low molecular weight polymer having an intrinsic viscosity [η] of 10-30ml/g, preferably 15-25ml/g.

The method of blending the high molecular weight, fluorine-containing elastomer with the low molecular weight, fluorine-containing elastomer is not particularly limited. For example, these elastomer latexes are mixed together in a desired proportion, stirred and added with an aqueous sodium chloride solution, etc. to conduct coagulation, followed by water washing, drying, etc. The resulting fluorine-containing elastomer is a fluorine-containing elastomer of a multipeak type having an intrinsic viscosity [η] of 20-180ml/g, preferably 30-100ml/g, and a Mw/Mn of 2-20, preferably 3-15, with distinguished characteristics in processability, particularly extrusion processability and extruded surface.

The fluorine-containing elastomer of monopeak type or multipeak type can be vulcanization molded, etc. with at least one of a polyol vulcanizing agent and a polyamine vulcanizing agent, an organic peroxide, and a polyfunctional unsaturated compound to obtain a cured or processed product.

The polyol vulcanizing agent for use in the present invention is a polyhydroxy aromatic compound as a cross-linking agent, where at least one of a quaternary ammonium salt, a quaternary phosphonium salt, and an iminium salt can be used as a vulcanization accelerator at the same time, and furthermore it is preferable to use at least one of a divalent metal oxide or hydroxide, and a hydrotalcite as an acid acceptor.

The polyhydroxy aromatic compound is at least one of, for example, hydroquinone, 2,2-bis(4-hydroxyphenyl)propane [bisphenol A], 2,2-bis[4-hydroxyphenyl]perfluoropropane [bisphenol AF], 4,4 ' - dihydroxydiphenylmethane, 2,2-bis(4-hydroxyphenyl)butane, etc. and can be used in a proportion of 0.1-10 parts by weight, preferably 0.6-5 parts by weight, on the basis of 100 parts by weight of fluorine-containing elastomer.

At least one of quaternary ammonium salt, quaternary phosphonium salt, and iminium salt, for example, tetramethyl ammonium chloride, tetraethyl ammonium chloride, tetrapropyl ammonium chloride, tetrabutyl ammonium chloride, tetrabutyl ammonium bromide, bis(benzylphenylphosphine) iminium chloride, tetrabutylphosphonium chloride, benzyltriphenylphosphonium chloride, benzyltrioctylphosphonium chloride, iminium cation, etc. can be used in a proportion of 0.05-2 parts by weight, preferably 0.1-1 part by weight, on the basis of 100 parts by weight of fluorine-containing elastomer.

As the divalent metal oxide or hydroxide, at least one of oxides or hydroxide of such metals as magnesium, calcium, zinc, lead, etc. can be used in a proportion of 1-30 parts by weight, preferably 2-20 parts by weight, on the basis of 100 parts by weight of fluorine-containing elastomer, same as in the case of the hydrotalcite. To improve the effect of the vulcanization accelerator, if required, various vulcanization acceleration-activating agents can be used together, the vulcanization acceleration-activating agents typically include DBU (1,8-diazabicyclo [5.4.0] undecene-7), and sulfone compounds such as dimethylsulfone, dichlorodiphenylsulfone, etc.

The polyamine vulcanizing agent for use in the present invention is a polyamine compound as a cross-linking agent, where it is preferable to use a divalent metal oxide as an acid acceptor at the same time. As the polyamine compound, at least one of, for example, hexamethylenediamine carbamate, N,N ' -dicinnamylidene-1,6-hexamethylenediamine, 4,4' -bis(aminocyclohexyl)methane carbamate, etc. can be used in a proportion of 0.1-10 parts by weight, preferably 0.5-5 parts by weight, on the basis of 100 parts by weight of fluorine-containing elastomer.

The divalent metal oxide includes at least one of oxides of metals such as magnesium, calcium, zinc, lead, etc. and can be used in a proportion of 1-30 parts by weight, preferably 5-20 parts by weight, on the basis of 100 parts by weight of fluorine-containing elastomer.

When the polyol vulcanizing agent and the polyamine vulcanizing agent are used together, it is preferable to use a composition comprising 0.1-5 parts by weight of a polyhydroxy aromatic compound, 0.05-2 parts by weight of a salt selected from quaternary ammonium salts, quaternary phosphonium salts, and iminium salts, 0.1-5 parts by weight of a polyamine compound, and 1-30 parts by weight of a divalent metal oxide or hydroxide, on the basis of 100 parts by weight of fluorine-containing elastomer.

The organic peroxide is preferably those which can easily generate peroxy radicals by heat, and at least one of dialkyl peroxides, for example, 2,5-dimethyl-2,5-di(t-butylperoxy)hexine-3, 2,5-dimethyl-2,5-di(t-butylperoxy)hexane, etc. can be used. These organic peroxides can generate radicals by heat during the vulcanization, and the generated radicals act on the iodine · bromine groups in the polymer to generate radicals in the polymer, and it can be presumed that cross-linking takes place by bonding two radicals in the molecule one to another.

The amount of the organic peroxide can be selected appropriately in view of the amount of active oxygen, the decomposition temperature, etc. and generally can be used 0.05-10 parts by weight, preferably 0.05-5 parts by weight, on the basis of 100 parts by weight of fluorine-containing elastomer. When the amount of the organic peroxide is less than 0.05 parts by weight, the radical generation amount is so small that the cross-linking fails to proceed fully, whereas it is more than 10 parts by weight, not only the desired effect is no more obtained, rather resulting in economical disadvantages, but also bubbling caused by the decomposition gas from the peroxide will take place, resulting in deterioration of mechanical properties. This is not preferable.

As the polyfunctional unsaturated compound, at least one of, for example, triallyl cyanurate, triallyl isocyanurate, tris(diallylamine)-s-trazine, etc., preferably triallyl isocyanurate, can be used in a proportion of 0.01-10 parts by weight, preferably 0.1-5 parts by weight, on the basis of 100 parts by weight of fluorine-containing elastomer.

To specially improve crack generation, so called solvent cracks, when immersed into a solvent, it is desirable to add 0.05-0.6 parts by weight, preferably 0.05-0.4 parts by weight, of an organic peroxide, and 0.01-5 parts by weight, preferably 0.01-1.0 part by weight, of a polyfunctional unsaturated compound, on the basis of 100 parts by weight of fluorine-containing elastomer, where the polyhydroxy aromatic compound is added in a proportion of 0.5-3 parts by weight, preferably 1.0-2.5 parts by weight, and a salt selected from the quaternary ammonium salts, the quaternary phosphonium salts, and the iminium salts is added in a proportion of 0.1-1.0 part by weight, preferably 0.2-0.75 parts by weight, on the basis of 100 parts by weight of fluorine-containing elastomer.

In addition to the afore-mentioned essential components, the present fluorine-containing elastomer composition can further contain various additives, if required, for example, a reinforcing agent such as carbon black, silica, clay, talc, etc., a processing aid such as wax, etc., or the like, and the present fluorine-containing elastomer composition comprising the foregoing components can be prepared by mixing and kneading through rolls, Banbury mixer, etc.

After thorough kneading, the resulting fluorine-containing elastomer composition is cut into a long strip and extruded through an extrusion molding machine to obtain a tubular hose. The desired vulcanizate can be obtained by secondary vulcanization such as steaming, etc., if required.

EXAMPLES

The present invention will be described in detail below, referring to Examples.

REFERENCE EXAMPLE 1

The following components were charged into an autoclave having a net capacity of 10L :

|  |  |
|---|---|
| Ammonium perfluorooctanoate | 10g |
| Disodium hydrogen phosphate | 6.3g |
| Deionized water | 5L |

, and the inside space of the autoclave was thoroughly flushed with a nitrogen gas for deaeration, and then the following component was charged thereto :

|  |  |
|---|---|
| 1-bromo-2-iodotetrafluoroethane [IBrTFE] | 3.5g |

Then, the following components were charged thereto :

|  |  |
|---|---|
| Vinylidene fluoride [VdF] | 60g |
| Tetrafluoroethylene [TFE] | 50g |
| Hexafluoropropylene [HFP] | 530g |

, then the autoclave was heated to 80˚C, and the following component was charged thereto to initiate polymerization reaction.

|  |  |
|---|---|
| Ammonium persulfate [APS] | 1.5g |

The inside pressure was found to be 1.7MPa.

Then, a gas mixture of VdF/TFE/HFP (52.1/28.7/19.2mol.%) was charged thereto under pressure until the inside pressure reached 2.4MPa. When the inside pressure was lowered to 2.3MPa, said gas mixture was additionally charged thereto under pressure until the inside pressure reached 2.4MPa. Such additional charging operation was repeated, whereby 720g of VdF, 620g of TFE, and 620g of HFP were additionally charged thereto. Sum total amount of respective charged gas mixture components and the charged gas composition are as follows :

|  |  |
|---|---|
| VdF | 780g (46.0mol.%) |
| TFE | 670g (25.2mol.%) |
| HFP | 1,150g (28.8mol.%) |

The polymerization reaction was carried out for 4 hours in that manner, and then the residual gas was purged from the autoclave to discontinue the reaction. The resulting aqueous latex of fluorine-containing elastomer (solid matter concentration : 29.7wt.%) was added to an aqueous 7wt.% sodium chloride solution to conduct coagulation, followed by water washing and drying to obtain a fluorine-containing elastomer. The fluorine-containing elastomer was subjected to determination of the following test items :

Copolymer composition : determined by JMN-LA300 Fourier transform nuclear magnetic resonance apparatus, made by JEOL Ltd.
Intrinsic viscosity [η] : determined by Ube-Rhode viscometer, using 0.1g/100ml solution in methyl ethyl ketone at 35˚C
Polymer Mooney viscosity ($ML_{1+10}$) : determined by preheating at test temperature of 121˚C for one minute, then immediately rotating the rotor, and measuring the viscosity 10 minutes thereafter
Molecular weight Measurement : determined by MODEL 556 HPLC column oven, made by Gas Chro Kogyo Co., provided with type 851-AS intelligent auto sanipla, made by Nippon Bunko Kogyo Co., MODEL 576 LC pump, made by Gas Chro Kogyo Co., and two columns of KF-804 and KF-806, respectively, made by Showa Denko K.K., and detector JASCO 830RI differential refractometer, made by Nippon Bunko Kogyo Co., using tetrahydrofuran as a developing solution at a sample concentration of 0.3wt.% at 40˚C

For analysis of molecular weight and molecular weight distribution, SIC Labchart 180, made by System Instrument Co., was used, and for standard polymers for molecular weight working curves, various monodispersed polystyrenes [Mw/Mn=1.1(MAX)], products of Toyo Soda Co., were used. Molecular weight distribution shape was shown as "mono" for monopeak type and "multi" for multipeak type in the following Table 1.

REFERENCE EXAMPLE 2

In Reference Example 1, the amount of IBrTFE was changed to 35g, and that of APS to 10g, respectively. The inside pressure at the time of polymerization initiation was 1.6MPa, and the polymerization time was 3 hours. Separation and determination of fluorine-containing elastomer from the resulting aqueous latex of fluorine-containing elastomer (solid matter concentration : 30.1wt.%) were carried out in the same manner as in Reference Example 1.

EXAMPLE 1

The aqueous latex of fluorine-containing elastomer obtained in Reference Example 1, and the aqueous latex of fluorine-containing elastomer obtained in Reference Example 2 were mixed together to make the solid matter weight ratio of 50:50, followed by coagulation with an aqueous 7wt.% sodium chloride solution, water washing, and drying to obtain a fluorine-containing elastomer blend A (multipeak type). Determination of test items except the copolymer composition were carried out in the same manner as in Reference Example 1.

EXAMPLE 2

In Reference Example 1, the amount of IBrTFE was changed to 9g, and that of APS to 4g, respectively. Separation and determination of fluorine-containing elastomer B (monopeak type) from the resulting aqueous latex of fluorine-containing elastomer (solid matter concentration : 30.3wt.%) were carried out in the same manner as in Reference Example 1.

Results of determination obtained in the foregoing Reference Examples 1 and 2, and Examples 1 and 2 are shown in the following Table 1.

Table 1

| Determination item | | Ref.Ex.1 | Ref.Ex.2 | Ex. 1 | Ex. 2 |
|---|---|---|---|---|---|
| Copolymer composition | | | | | |
| VdF | (mol.%) | 54.6 | 53.0 | (53.8) | 54.0 |
| TFE | (mol.%) | 25.0 | 25.7 | (25.35) | 24.9 |
| HFP | (mol.%) | 20.4 | 21.3 | (20.85) | 21.1 |
| Intrinsic viscosity [$\eta$] | (ml/g) | 80.1 | 19.5 | 42.2 | 43.0 |
| Polymer Mooney viscosity ($ML_{1+10}$) | | 120 | - | 30.8 | 29.5 |
| Weight average molecular weight Mw | ($\times 10^4$) | 33.7 | 4.1 | 15.97 | 17.3 |
| Mw/Mn ratio | | 2.64 | 1.81 | 4.34 | 2.90 |
| Molecular weight distribution shape (peak type) | | mono | mono | multi | mono |

EXAMPLE 3

| | Parts by weight |
|---|---|
| Fluorinine-containing elastomer blend A | 100 |
| SFR carbon black (Seast GS, a product of Asahi Carbon Co.) | 14 |
| Vulcanizing agent master batch (fluororubber master batch of bisphenol AF ; weight ratio : 50:50) | 4 |
| Vulcanization accelerator master batch (fluororubber master batch of benzyltriphenyl phosphonium chloride ; weight ratio : 35:100) | 2 |
| 1.8-diazabicyclo [5.4.0] undecene-7 | 0.05 |
| Ca(OH)$_2$ (Calbit 2000, a product of Ohmi Chemical Co.) | 6 |
| MgO (Kyowamag #150, a product of Kyowa Chemical Co.) | 3 |
| 2,5-dimethyl-2,5-d(t-butylperoxy)hexane (Perhexa 25B-40, a product of JOF, concentration : 40%) | 0.6 |

(continued)

| | Parts by weight |
|---|---|
| Triallyl isocyanurate (a product of Nippon Kasei Chemical Co. concentration : 60%) | 0.6 |

The foregoing components were kneaded through 8-inch open rolls, and the resulting kneaded fluororubber compounds were subjected to determination or evaluation of Mooney viscosity, extrusion moldability (extrusion speed and extruded surface), and die swell, and the vulcanizates obtained by press vulcanization at 160 ˚C for 40 minutes were also subjected to determination or evaluation of normal state physical properties (hardness, 100% modulus, breaking strength, and elongation at break), compression set, methanol resistance, and molding flash state when molded. The determination or evaluation was carried out in the following manner.

Mooney viscosity ($ML_{mis}$) : according to JIS-K 6300 corresponding to ASTM D2084, by preheating a test piece at test temperature of 125˚C for one minute, then immediately rotating the rotor and reading for sufficient time to obtain a smooth curve showing relations between Mooney viscosity and time, and measuring the minimum value of the Mooney viscosity on the curve by Shimadzu Mooney viscosity SMV201 (L-type rotor)

Extrusion moldability : By extruding a tubular article through an extruder, made by Tosoku Seimitsu Kogyo Co. (D=25mm, L/D=15) with a die (nozzle diameter : 4mm) at a screw temperature of 80˚C, a head temperature of 110˚C, and a screw revolution rate of 40rpm to measure the extrusion speed and evaluate the extruded surface (where the extruded surface was evaluated by visually judging the texture degree of the surface and shown in 5 rankings ranging from A : the best and E : the poorest)

Die swell : calculated according to the following equation :

$$\text{Die swell} = (\text{tube outer diameter}) - (\text{die outer diameter})$$

$$/(\text{die outer diameter}) \times 100(\%)$$

Die outer diameter : 4mm

Normal state physical properties : according to JIS-K6301, corresponding to ASTM D412

Hardness : determined by a spring type, hardness tester, type A

100% modulus : By determining a necessary tensile stress for 100% stretching of a vulcanized sheet, 25mm $\times$ 100mm $\times$ 2mm, at 23˚C

Breaking strength and elongation at break : By punching a No. 3 dumbell-shaped test piece from a 3mm-thick vulcanized sheet and determining breaking strength (MPa) and elongation at break (%) at a stretching rate of 50cm/min. by a tensile tester

Compression set : according to JIS-K6301 corresponding to ASTM D395, by subjecting a P-24 O ring to 25% compression to keep it at 200˚C for 70 hours, followed by cooling to room temperature over 30 minutes and measuring the thickness by a thickness gage (made by Kyoto Polymer Gage Co.)

Molding flashes : By judging the flash sticking state when press vulcanized in a mold capable of molding 16 pieces of P-24 O rings at one time according to the following evaluation standard

○ : Flashes are easy to remove (good)
Δ : Flashes are removable (intermediate)
× : Flashes are hard to remove (poor)

Methanol resistance : By cutting a 2mm-thick sheet into square test pieces, about 40mm $\times$ about 10mm, and dipping the slender test pieces into methanol at 23˚C for 168 hours to determine a percent voluminal swelling

COMPARATIVE EXAMPLE 1

In the fluororubber compound of Example 1, neither triallyl isocyanurate nor organic peroxide were used.

COMPARATIVE EXAMPLE 2

In the fluororubber compound of Example 1, the amount of triallyl isocyanurate was changed to 4 parts by weight, and that of the organic peroxide to 2 parts by weight, respectively. Neither vulcanizing agent batch, nor vulcanization accelerator master batch, nor 1,8-diazadicyclo [5.4.0] undecene-7 was used .

COMPARATIVE EXAMPLE 3

|  | Parts by weight |
|---|---|
| Fluorine-containing elastomer blend A | 100 |
| SRF carbon black (Seast GS) | 14 |
| MgO (Kyowamag #30, a product of Kyowa Chemical Co.) | 15 |
| Hexamethylenediamine carbamate (AC-6, a product of Unimatec Co.) | 1.5 |

Fluororubber compound comprising the foregoing components was subjected to determination or evaluation in the same manner as in Example 1.

EXAMPLE 4

In Example 1, the same amount of fluorine-containing elastomer B was used in place of the fluorine-containing elastomer blend A.

COMPARATIVE EXAMPLE 4

In Comparative Example 1, the same amount of fluorine-containing elastomer B was used in place of the fluorine-containing elastomer blend A.

COMPARATIVE EXAMPLE 5

In Comparative Example 2, the same amount of fluorine-containing elastomer B was used in place of the fluorine-containing elastomer blend A.

COMPARATIVE EXAMPLE 6

In Comparative Example 3, the same amount of fluorine-containing elastomer B was used in place of the fluorine-containing elastomer blend A.

Results of the foregoing Examples and Comparative Examples are shown in the following Table 2. Example 4 uses fluorine-containing elastomer B of monopeak type, and thus the extruded surface is not so better in the extrusion moldability, but the vulcanizates have distinguished characteristics.

Table 2

| Determination · elevation item | Ex. 3 | Comp. Ex. 1 | Comp. Ex. 2 | Comp. Ex. 3 | Ex.4 | Comp. Ex. 4 | Comp. Ex. 5 | Comp. Ex. 6 |
|---|---|---|---|---|---|---|---|---|
| [Fluororubber compound] | | | | | | | | |
| Mooney viscosity ($ML_{min}$) | 42 | 41 | 40 | 38 | 43 | 41 | 41 | 39 |
| Extrusion moldability | | | | | | | | |
| Extrusion speed (cm/min.) | 220 | 220 | 230 | 230 | 200 | 210 | 210 | 210 |
| Extruded surface | A | A | A | A | E | E | E | E |
| Die swell | 26 | 24 | 23 | 22 | 23 | 23 | 20 | 19 |
| [Vulcanizates] | | | | | | | | |
| Normal state physical properties | | | | | | | | |
| Hardness (JIS-A) | 71 | 68 | 70 | 67 | 71 | 68 | 71 | 67 |

(continued)

| Determination·elevation item | Ex. 3 | Comp. Ex. 1 | Comp. Ex. 2 | Comp. Ex. 3 | Ex.4 | Comp. Ex. 4 | Comp. Ex. 5 | Comp. Ex. 6 |
|---|---|---|---|---|---|---|---|---|
| 100% modulus (MPa) | 3.8 | 2.8 | 3.5 | 2.7 | 4.0 | 2.7 | 3.7 | 2.7 |
| Breaking strength (MPa) | 16.5 | 12.8 | 15.5 | 11.8 | 17.3 | 13.0 | 16.5 | 12.1 |
| Elongation at break (%) | 320 | 360 | 340 | 420 | 310 | 370 | 330 | 400 |
| Compression set (%) | 22 | 28 | 35 | 37 | 20 | 27 | 34 | 36 |
| Methanol resistance (%) | 2.4 | 6.0 | 3.3 | 7.3 | 2.2 | 5.5 | 3.0 | 6.4 |
| State of molding flashes | ○ | ○ | Δ-× | ○-Δ | ○ | ○ | Δ-× | ○-Δ |

INDUSTRIAL UTILITY

The present fluorine-containing elastomer can give vulcanizates having a high strength and well balanced physical properties between the strength and elongation, and the vulcanizates have much more improved solvent resistance, particularly methanol resistance, than the conventional ones, and thus are suitable for use in the fuel system parts, particularly fuel hoses, for fuels such as alcohol, gasoline, kerosene, naphtha, etc.

**Claims**

1.   A fluorine-containing elastomer for molding fuel system parts, which has a copolymer composition comprising 10-40% by weight of tetrafluoroethylene (TFE), 80-30% by mole of vinylidene fluoride (VdF), and 10-30% by mole of hexafluoropropylene (HFP), as copolymerized in the presence of an iodine and bromine-containing compound represented by the following general formula :

$$RBr_nI_m$$

(where R is a fluorohydrocarbon group, a chlorofluorohydrocarbon group, or a hydrocarbon group, each having 1-10 carbon atoms, and n and m each are 1 or 2), and has an intrinsic viscosity of 20-180ml/g, Mw (weight average molecular weight)/Mn (number average molecular weight) ratio of 2-10, and a molecular weight distribution of monopeak type.

2.   A fluorine-containing elastomer for molding fuel system parts, which has a copolymer composition comprising 10-40% by weight of tetrafluoroelthylene (TFE), 80-30% by mole of vinylidene fluoride (VdF), and 10-30% by mole of hexafluoropropylene (HFP), as copolymerized in the presence of an iodine and bromine-containing compound represented by the following general formula :

$$RBr_nI_m$$

(where R is a fluorohydrocarbon group, a chlorofluorohydrocarbon group, or a hydrocarbon group, each having 1-10 carbon atoms, and n and m each are 1 or 2), and has an intrinsic viscosity of 20-180ml/g, Mw (weight average molecular weight)/Mn (number average molecular weight) ratio of 2-20, and a molecular weight distribution of multipeak type.

3.   A fluorine-containing elastomer for molding fuel system parts according to Claim 2, wherein the fluorine-containing elastomer is a blend of a fluorine-containing elastomer having an intrinsic viscosity [η] of 50-130ml/g and a fluorine-containing elastomer having an intrinsic viscosity [η] of 10-30ml/g.

4. A fluorine-containing elastomer composition for molding fuel system parts, which comprises 100 parts by weight of a fluorine-containing elastomer of Claim 1, 0.1-10 parts by weight of at least one of a polyol vulcanizing agent and a polyamine vulcanizing agent, 0.05-10 parts by weight of an organic peroxide, and 0.01-10 parts by weight of a polyfunctional unsaturated compound.

5. Fuel system parts obtained by vulcanization molding a fluorine-containing elastomer of Claim 4.

6. Fuel system parts according to Claim 5, wherein the fuel system parts are fuel hoses.

7. A fluorine-containing elastomer composition for molding fuel system parts, which comprises 100 parts by weight of a fuel-containing elastomer of Claim 2, 0.1-10 parts by weight of at least one of a polyol vulcanizing agent and a polyamine vulcanizing agent, 0.05-10 parts by weight of an organic peroxide, and 0.01-10 parts by weight of a polyfunctional unsaturated compound.

8. A fluorine-containing elastomer composition for molding fuel system parts according to Claim 7, wherein the amount of the organic peroxide is 0.05-0.6 parts by weight and that of the polyfunctional unsaturated compound is 0.01-5 parts by weight.

9. Fuel system parts obtained by vulcanization molding a fluorine-containing elastomer composition of Claim 7.

10. Fuel system parts according to Claim 9, wherein the fuel system parts are fuel hoses.

## INTERNATIONAL SEARCH REPORT

| International application No. |
|---|
| PCT/JP2007/069270 |

A.  CLASSIFICATION OF SUBJECT MATTER
*C08F214/22*(2006.01)i, *C08F2/44*(2006.01)i, *C08K5/13*(2006.01)i, *C08K5/14*
(2006.01)i, *C08K5/17*(2006.01)i, *C08K5/3477*(2006.01)i, *F23K5/02*(2006.01)i

According to International Patent Classification (IPC) or to both national classification and IPC

B.  FIELDS SEARCHED

Minimum documentation searched (classification system followed by classification symbols)
C08F214/22, C08F2/44, C08K5/13, C08K5/14, C08K5/17, C08K5/3477, F23K5/02

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)
WPI

C.  DOCUMENTS CONSIDERED TO BE RELEVANT

| Category* | Citation of document, with indication, where appropriate, of the relevant passages | Relevant to claim No. |
|---|---|---|
| Y | JP 11-315180 A  (Nippon Mektron, Ltd.), 16 November, 1999 (16.11.99), Par. Nos. [0004] to [0087] & US 6160053 A | 1-10 |
| Y | JP 2003-165802 A  (Nippon Mektron, Ltd.), 10 June, 2003 (10.06.03), Par. Nos. [0013] to [0031] (Family: none) | 1-10 |
| Y | JP 2005-350529 A  (UNIMATEC CO., LTD.), 22 December, 2005 (22.12.05), Par. Nos. [0011] to [0021] (Family: none) | 1-10 |

|☒| Further documents are listed in the continuation of Box C. | | ☐ See patent family annex. |

\*      Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 19 November, 2007 (19.11.07) | 04 December, 2007 (04.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/069270 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 07-196881 A  (E.I. Du Pont De Nemours & Co.),<br>01 August, 1995 (01.08.95),<br>Par. Nos. [0001] to [0039]<br>& WO 95/015359 A1        & EP 739378 A1 | 1-10 |
| Y | JP 04-209643 A  (Asahi Kasei Corp.),<br>31 July, 1992 (31.07.92),<br>Par. Nos. [0001] to [0079]<br>& EP 434046 A            & US 5218026 A<br>& EP 434046 B1 | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60072950 A
- JP 62030142 A
- JP 62030143 A
- JP 62079251 A
- JP 2509388 B
- JP 7196881 A